# EUROPEAN PATENT APPLICATION

(11) **EP 4 454 744 A1**
(43) Date of publication of application: **30.10.2024**
(21) Application number: 23170694.6
(22) Date of filing: 28.04.2023
(51) Int. Cl.: B01J 7/02, B01J 8/02, B01J 8/06, B01J 10/00, B01J 19/08, B01J 19/24

(54) **METHOD AND REACTOR FOR PRODUCING A CARBON MONOXIDE CONTAINING COMPOSITION**

(71) Applicant: refuel.green consulting & technologies GmbH, 01109 Dresden (DE)
(72) Inventor: BECKER, Sebastian, 01099 Dresden (DE); GUERRA NIEHOFF, Alejandro, 01099 Dresden (DE); HAID, Michael, 40885 Ratingen (DE)
(74) Representative: Henkel & Partner mbB

(57) **Abstract**

The present invention relates to a method of producing a carbon monoxide containing composition comprising the following steps:
a) providing a starting material composition containing carbon dioxide,
b) providing a reactor being at least partially filled with a liquid,
c) feeding the starting material composition provided in step a) into the reactor provided in step b) so that at least one gas bubble of the starting material composition forms within the liquid, and
d) generating a plasma by dielectric-barrier discharge in the at least one gas bubble so as to produce in the at least one gas bubble a product composition containing the carbon monoxide.

## Description

The present invention relates to a method for producing a carbon monoxide containing composition, such as synthesis gas, as well as to a reactor for performing the method.

Carbon monoxide is an important raw material for chemical syntheses, for instance for producing carboxylic acids, such as formic acid and acrylic acid, for producing synthesis gas containing carbon monoxide and hydrogen, and for producing phosgene. Synthesis gas, in turn, is an important raw material for synthesizing climate neutral synthetic fuels, such as methanol and hydrocarbons, for instance propane and butane, as alpha-olefins corresponding to those obtainable by dehydration of alcohols, as hydrocarbon mixtures corresponding to those obtainable by oligomerization of olefins, for instance ethylene and butylenes, or as hydrocarbon mixtures corresponding to those obtainable with a Fischer-Tropsch synthesis. Several different processes for producing synthesis gas are known, most of which using fossil raw materials, such as coal gasification or partial oxidation of methane. A major disadvantage of these methods is that by using a fossil feedstock significant amounts of fossil carbon dioxide are generated and emitted. However, this is undesirable for environmental reasons and in particular for climate protection reasons.

Recently, plasma based methods for producing synthesis gas have been proposed, such as a method comprising the step of decomposing methane to carbon and hydrogen in the presence of a plasma, the step of adding carbon dioxide to this mixture and thereafter the step of reacting carbon and carbon dioxide to carbon monoxide, such producing synthesis gas. However, this method still requires fossil starting material, namely methane, is comparably energy consuming, has a comparable low yield and requires expensive apparatuses.

In view of this, the object underlying the present invention is to provide a method of producing a carbon monoxide containing composition, such as synthesis gas, which is environmentally friendly, which may be performed climate neutral, which has a high yield, which is inexpensive and which does not require complex and expensive reactors.

In accordance with the present invention this object is satisfied by providing a method of producing a carbon monoxide containing composition comprising the following steps:
a) providing a starting material composition containing carbon dioxide,
b) providing a reactor being at least partially filled with a liquid,
c) feeding the starting material composition provided in step a) into the reactor provided in step b) so that at least one gas bubble of the starting material composition forms within the liquid, and
d) generating a plasma by dielectric-barrier discharge in the at least one gas bubble so as to produce in the at least one gas bubble a product composition containing the carbon monoxide.

This solution bases on the surprising finding that a carbon monoxide containing composition, such as synthesis gas, may be cost efficiently and with high yield be performed, when the starting material composition containing carbon dioxide and being in the form of one or more gas bubbles, which are dispersed in the liquid, is reacted in the presence of a non-thermal plasma being generated by dielectric-barrier discharge to the product composition containing the carbon monoxide, such as to synthesis gas. A particular advantage of this method is that it allows to use very simple and inexpensive reactors, such as a reactor comprising one reactor compartment, with a cathode being arranged on one side of the reactor compartment and an anode, which may be even water, being arranged on the opposite side of the reactor compartment, wherein further a dielectric barrier, preferably a solid dielectric barrier, is arranged between the anode and the cathode. Since the product composition at least partially diffuses from the gas bubbles into the liquid, in which the gas bubbles are dispersed, undesired plasma-assisted backreactions in the gas bubbles are avoided or at least significantly reduced, which contributes to the high yield of the method. Since chemical compounds with no or almost no fossil carbon footprint, such as carbon dioxide, are used as starting material composition, the method in accordance with the present invention is also environmentally friendly. In addition, the method allows to produce from the carbon monoxide containing product composition, such as synthesis gas, synthetic fuels, such as methanol or Fischer-Tropsch synthesis product, for instance by reacting the synthesis gas in the presence of a catalyst in an exothermic reaction to methanol or Fischer-Tropsch synthesis product. Furthermore, in particular since the starting material composition contains carbon dioxide from the atmosphere and/or from "green" sources, such as biogas production facilities, the method is climate neutral. All in all, the method in accordance with the present invention allows to produce a carbon monoxide containing composition, such as synthesis gas, wherein the method is environmentally friendly, may be performed climate neutral, has a high yield, is inexpensive and does not require complex and expensive reactors.

Synthesis gas means in accordance with the present invention any composition, which contains carbon monoxide and hydrogen and optionally oxygen.

Providing a starting material composition means in accordance with the present patent application merely that a starting composition is made available so that it can be fed into the reactor. For instance, providing a starting material composition comprises that the starting material composition being stored in a gas container is bought or that the starting material composition is prepared by mixing two or more different gases in a vessel.

A dielectric-barrier discharge is defined in accordance with the present invention as an electrical discharge between two electrodes, wherein between the two electrodes an electric field being generated by alternating voltage or pulsed direct voltage is present, and wherein the two electrodes are separated by a dielectric barrier so that there is no conductive electrical connection between both electrodes. The dielectric barrier is thus a continuous and permanent dielectric barrier meaning that it assures that there is no conductive electrical connection between the electrodes during the whole time period, in which an electric field is present between both electrodes. Preferably, the dielectric barrier is a solid dielectric barrier and more preferably a solid, non-perforated dielectric barrier. The plasma generated by dielectric-barrier discharge is a non-thermal plasma.

In accordance with the present invention, a starting material composition containing carbon dioxide is provided in step a). The starting material composition may be gaseous, liquid or even solid at the temperature and pressure conditions being present in step a). If the starting material composition is liquid, it may be depressurized and/or heated in step c) in order to form the at least one gas bubble within the liquid, whereas the starting material composition may be sublimated in step c) in the case of a solid starting material composition. However, it is preferred that in step a) a gaseous starting material composition is provided.

In accordance with a particular preferred embodiment of the present invention, in step a) a starting material composition is provided, which contains, essentially consists or consists of carbon dioxide. The starting material composition of this embodiment preferably contains 20 to 100% by volume, more preferably 40 to 100% by volume, even more preferably 60 to 100% by volume, still more preferably 80 to 100% by volume, yet more preferably 90 to 100% by volume, even more preferably 95 to 100% by volume and most preferably 100% by volume of carbon dioxide based on 100% by volume of the starting material composition. The carbon dioxide reacts in the presence of non-thermal plasma to carbon monoxide and oxygen.

In a further development of the idea of the present invention, it is preferred that in step a) a starting material composition is provided, which contains, based on 100% by volume of the starting material composition, 1 to 30% by volume of water and 70 to 99% by volume of carbon dioxide. While the carbon dioxide reacts in the presence of non-thermal plasma to carbon monoxide and oxygen, the water reacts in the presence of non-thermal plasma to hydrogen and oxygen so that a synthesis gas containing carbon monoxide, hydrogen and oxygen is obtained. Goods results are in particular obtained, when the sum of water and carbon dioxide in the starting material composition is at least 70% by volume, preferably at least 80% by volume, more preferably at least 90% by volume, still more preferably at least 95% by volume and most preferably 100% by volume. More preferably, in step a) a starting material composition is provided, which contains, based on 100% by volume of the starting material composition, 5 to 25% by volume of water and 75 to 95% by volume of carbon dioxide.

In accordance with a further preferred embodiment of the present invention, in step a) a starting material composition is provided, which contains, based on 100% by volume of the starting material composition, 5 to 30% by volume of at least one hydrocarbon according to the formula CₓH_{y}, wherein x is an integer of 1 to 100 and y is at least equal to x or at most 2·x + 2, preferably 2·x + 2, and 70 to 95% by volume of carbon dioxide. Good results are in particular obtained, when x is an integer of 1 to 50, more preferably of 1 to 20, still more preferably of 1 to 10, yet more preferably of 1 to 5, even more preferably of 1 to 3 and most preferably of 1 or 2. While the carbon dioxide reacts in the presence of non-thermal plasma to carbon monoxide and oxygen, the hydrocarbon reacts in the presence of non-thermal plasma to carbon monoxide, hydrogen and oxygen so that a synthesis gas containing carbon monoxide and hydrogen is obtained. Goods results are in particular obtained, when the sum of at least one hydrocarbon according to the formula CₓH_{y} and carbon dioxide in the starting material composition is at least 70% by volume, preferably at least 80% by volume, more preferably at least 90% by volume, still more preferably at least 95% by volume and most preferably 100% by volume. More preferably, in step a) a starting material composition is provided, which contains, based on 100% by volume of the starting material composition, 70 to 95% by volume of carbon dioxide and preferably 5 to 30% by volume of at least one hydrocarbon according to the formula CₓH_{y} and 75 to 90% by volume of carbon dioxide.

In accordance with a further preferred embodiment of the present invention, in step a) a starting material composition is provided, which contains 20 to 60% by volume of carbon dioxide and 40 to 80% by volume of hydrogen. While the carbon dioxide reacts in the presence of non-thermal plasma to carbon monoxide and oxygen, the hydrogen remains unchanged so that a synthesis gas containing carbon monoxide, hydrogen and oxygen is obtained. Goods results are in particular obtained, when the sum of hydrogen and carbon dioxide in the starting material composition is at least 70% by volume, preferably at least 80% by volume, more preferably at least 90% by volume, still more preferably at least 95% by volume and most preferably 100% by volume.

In a further development of the idea of the present invention, it is preferred that in step a) a starting material composition is provided, which contains, based on 100% by volume of the starting material composition, i) 1 to 30% and preferably 5 to 25% by volume of water, ii) 5 to 30% by volume and preferably 10 to 25% by volume of at least one hydrocarbon according to the formula CₓH_{y}, wherein x is an integer of 1 to 100 and y is at least equal to x or at most 2·x + 2, preferably 2·x + 2, 0 to 20% by volume of hydrogen and carbon dioxide, wherein the sum of water, of at least one hydrocarbon according to the formula CₓH_{y}, of hydrogen and of carbon dioxide is at least 80% by volume, preferably at least 90% by volume, more preferably at least 95% by volume, still more preferably at least 99% by volume and most preferably 100% by volume.

Without wishing to be bound to any theory or mechanism, it is considered that in step d) carbon dioxide reacts in the presence of the plasma to carbon monoxide, water reacts to hydrogen and oxygen and a hydrocarbon according to the formula CₓH_{y} reacts to carbon monoxide and hydrogen, so that a starting material composition containing carbon dioxide and optionally water and/or hydrocarbon according to the formula CₓH_{y} and/or hydrogen is subjected, among others, to the following plasma-assisted or plasma-catalyzed reactions generating a product composition containing carbon monoxide and hydrogen:
Carbon dioxide dissociation: 2·CO₂ → 2·CO + O₂
Water dissociation: 2·H₂O → 2·H₂ + O₂
Reverse-water-gas-shift reaction (RWGS): CO₂ + H₂ → CO + H₂O
Steam Reforming: CₓH_{y} + x·H₂O → x CO + (x+0.5 y) H₂
Dry-Reforming: CₓH_{y} + x·CO₂ → 2 x CO + 0.5 y H₂

Thus, a starting material composition containing carbon dioxide and optionally water and/or hydrocarbon according to the formula CₓH_{y} and/or hydrogen may be reacted during the plasma in step d) to a product composition consisting of or comprising synthesis gas, i.e. a mixture containing carbon monoxide and hydrogen and optionally oxygen. Such a synthesis gas may be used for the synthesis of alkanes, cycloalkanes, alkenes, aromatic hydrocarbons, alcohols, aldehydes, ketones and carboxylic acids, such as particularly of formic acid, propane, butane, and synthetic fuel, such as methanol, methane, alpha-olefins corresponding to those obtainable by dehydration of alcohols, hydrocarbon mixtures corresponding to those obtainable by oligomerization of olefins, such as of ethylene and butylenes, or hydrocarbon mixtures corresponding to those obtainable with a Fischer-Tropsch synthesis. Fischer-Tropsch synthesis products may be easily converted to efficient fuels by cracking and isomerization. A hydrocarbon mixture corresponding to those obtainable with a Fischer-Tropsch synthesis typically contains, based on 100% by mass of the mixture, 3 to 12% methane, 5 to 15% ethane, propane and butane, 10 to 20% naphtha, 10 to 20% kerosene, 20 to 30% diesel, and 20 to 30% wax.

The present invention is not particularly limited concerning the kind of reactor being provided in step b), as long as it allows to generate a plasma by dielectric barrier discharge, i.e. as long as it comprises two electrodes, a dielectric barrier and preferably a solid, non-perforated dielectric barrier between the electrodes and a power supply unit allowing to generate an alternating voltage or a pulsed direct voltage between the electrodes. As set out above, all reactions of step d) take place in one reactor and more preferably in (only) one reactor compartment being arranged in the reactor.

For instance, in step b) a reactor may be provided, which comprises two electrodes, a source for alternating voltage or pulsed direct voltage being connected with the two electrodes, a reactor compartment being arranged between the two electrodes and being at least partially filled with the liquid, and a dielectric barrier and preferably a solid, non-perforated dielectric barrier being arranged between the reactor compartment and one of the two electrodes, wherein in step c) the starting material composition is continuously fed into the reactor compartment at a first location and the product composition is continuously withdrawn from the reactor compartment at a second location.

The dielectric barrier is preferably made of a solid material having an electric conductivity of less than 10⁻⁶ S/m. Good results are in particular obtained, when the dielectric barrier is made of a solid material an electric conductivity of less than 10⁻⁷ S/m, more preferably of less than 10⁻⁸ S/m, even more preferably of less than 10⁻⁹ S/m, still preferably of less than 10⁻¹⁰ S/m and most preferably of less than 10⁻¹¹ S/m. Suitable examples for the solid materials used as dielectric barrier are glasses, such as borosilicate glasses (e.g. Pyrex or Duran, such as Boro 3.3), quartz glasses, ceramics and plastic materials.

In accordance with a particular preferred embodiment of the present invention, the dielectric barrier is made of a dielectric material, which has a comparable high permeability for oxygen and/or oxygen ions. This allows that oxygen and/or oxygen ions being generated in any of the reactions taking place in step d), such as oxygen being generated as result of plasma-assisted or plasma-catalyzed water dissociation and/or of plasma-assisted or plasma-catalyzed carbon dioxide dissociation, is at least partially removed from the at least one gas bubble and the liquid, so that no or at least less oxygen may react with hydrogen being present in the starting material composition and product composition. Advantageously, thereby an undesired consumption of the expensive hydrogen in a side-reaction with oxygen is avoided or at least reduced, and thereby no or at least less oxygen is contained in the product composition so that no oxygen or, if at all, only small amounts of oxygen need to be removed from the product composition. A suitable example for a dielectric material having a comparable high permeability for oxygen is zirconium dioxide.

The cathode may be formed of any material having a high electric conductivity, such as an electric conductivity of at least 10⁴ S/m, preferably of at least 10⁵ S/m, more preferably of at least 10⁶ S/m, still more preferably of at least 10⁷ S/m and most preferably of at least 5·10⁷ S/m. Suitable examples therefore are metals, such as in particular copper, titanium or stainless steel. The cathode may be also made of a non-conductive material, which is covered with a conductive coating, such as with a metal plating, with an alloy plating made, with a mesh made of a metal or with a mesh made of an alloy. More specifically, the cathode may be a glass or plastic pipe being covered with a conductive stainless steel mesh, which may be optionally further covered with a dielectric glass, which in turn may be covered with a metal pipe.

Also, the anode may be formed of any material having a high electric conductivity, such as an electric conductivity of at least 10⁴ S/m, preferably of at least 10⁵ S/m, more preferably of at least 10⁶ S/m, still more preferably of at least 10⁷ S/m and most preferably of at least 5·10⁷ S/m. However, since the anode is preferably grounded, the electric conductivity of the anode material is not so important. Thus, the anode may be formed also of a material having an electric conductivity of less than 10⁴ S/m. In fact, it is preferred to form the anode from a material having a comparable high specific heat capacity, because this allows the anode also to function as a cooling agent, thus removing heat being generated during the method from the reactor. This allows to avoid the formation of hot spots in the reactor during its operation. Good results are in particular obtained, when the anode is formed of a material having a specific heat capacity of at least 1.5 kJ/(kg K), more preferably of at least 2.0 kJ/(kg·K), still more preferably of at least 2.5 kJ/(kg K), yet more preferably of at least 3.0 kJ/(kg-K), even more preferably of at least 3.5 kJ/(kg K) and most preferably of at least 4.0 kJ/(kg-K). Suitable examples for anode materials are water, ionic liquids, hydrocarbons, such as oils, and metals, such as metal grids or metal pipes. For instance, the anode may be a combination of a metal mesh and heat transfer oil. Alternatively, it may be a combination of a plurality of supports, such as a plurality of glass tubes, each of which being covered with a metal coating, such as one being produced with a sputter method, and air or heat transfer oil flowing between the individual covered supports. This is a suitable example for a cost-efficient anode. Most preferably, the anode is formed from water, such as from boiler feed water.

As indicated above, it is preferred that the anode is grounded, i.e. that the anode is the zero potential.

In a further development of the idea of the present invention, it is proposed that the reactor compartment is on one of its sides surrounded by the cathode and on an opposite side by the dielectric barrier, wherein the anode is arranged on the side of the dielectric barrier being opposite to the side of the dielectric barrier surrounding the reactor compartment. In addition, a cooling agent may be further arranged on the side of the dielectric barrier being opposite to the side of the dielectric barrier surrounding the reactor compartment, wherein it is preferred to use an anode being made of a material having a high specific heat capacity, such as water, so that the anode functions also as cooling agent.

In a further preferred embodiment, the reactor compartment has the cross-sectional form of an annular ring, wherein the cathode is arranged at or adjacent to the inner peripheral surface area of the annular reactor compartment, wherein the dielectric barrier is arranged at or adjacent to the outer peripheral surface area of the reactor compartment, wherein the anode is arranged outside the outer peripheral surface area of the dielectric barrier, and wherein optionally further a cooling compartment being filled with cooling agent is arranged between the dielectric barrier and the anode, if the anode does not also function as cooling agent.

In accordance with a further preferred embodiment of the present invention, the reactor further comprises a gas bubble generator in order to allow that the starting material composition may easily form one or more gas bubbles within the liquid during step c). Preferably, the gas bubble generator is or comprises at least one of an opening, a nozzle, an injector and a porous body. For example, the porous body may be composed of pumice stone, carbon foam or silicon carbide foam.

In a preferred combination of the aforementioned embodiments, the reactor comprises a hollow cylindrical vessel, the peripheral surface of which being formed of an outer wall forming the dielectric barrier, wherein a cylindrical cathode having a smaller diameter than the inner diameter of the interior space of the hollow cylindrical vessel being provided with a central through hole extending from the top surface to the bottom surface of the cylindrical cathode is arranged in the center of the cylindrical vessel. The hollow cylindrical vessel is preferably a vertical hollow cylindrical vessel, i.e. a vessel having a larger height than diameter. The cathode preferably does not extend to the bottom of the cylindrical vessel so that a cylindrical gap is formed between the bottom of the cylindrical vessel and the lower end of the cathode. Preferably, the cylindrical gap extends from the bottom of the cylindrical vessel upwardly over 1 to 40% and more preferably over 5 to 20% of the height of the cylindrical vessel. The reactor compartment is the sum of the cylindrical gap being formed between the bottom of the cylindrical vessel and the lower end of the cathode and the annular gap being formed between the outer peripheral surface of the cathode and the inner peripheral surface of the outer wall of the hollow cylindrical vessel. Thus, the cylindrical cathode is concentrically surrounded on its peripheral surface by the reactor compartment and is surrounded on its bottom end by the reactor compartment being at least partially filled with the liquid, wherein the peripheral surface of the reactor compartment in turn is surrounded by the outer wall and the outer wall is surrounded by the anode. The starting material composition is continuously fed during step c) into the through hole on the top surface of the cylindrical cathode, led through the through hole to the bottom surface of the cylindrical cathode, where it enters the reactor compartment and is deflected into the annular gap portion of the reactor compartment, thereby forming at least one and preferably a plurality of gas bubbles in the liquid. The product composition is continuously withdrawn from the top surface of the reactor compartment.

In accordance with an alternative embodiment of the present invention, the reactor is constructed similar to the above described embodiment, except that the cathode does not comprise a through hole and that the starting material composition is continuously fed in step c) into the bottom portion of the reactor compartment. In other words, the reactor of this embodiment comprises a hollow cylindrical vessel, the peripheral surface of which being formed of an outer wall forming the dielectric barrier, wherein a cylindrical cathode is arranged in the center of the cylindrical vessel, wherein the cylindrical cathode is concentrically surrounded on its peripheral surface and on its bottom end by the reactor compartment being at least partially filled with the liquid, wherein the peripheral surface of the reactor compartment in turn is surrounded by the outer wall and the outer wall is surrounded by the anode. Hence, also in this embodiment the cathode does not extend to the bottom of the cylindrical vessel so that a cylindrical gap is formed between the bottom of the cylindrical vessel and the lower end of the cathode, wherein the cylindrical gap extends in this embodiment preferably from the bottom of the cylindrical vessel upwardly over 1 to 40% and more preferably over 5 to 20% of the height of the cylindrical vessel. Again, the reactor compartment is the sum of the cylindrical gap being formed between the bottom of the cylindrical vessel and the lower end of the cathode and the annular gap being formed between the outer peripheral surface of the cathode and the inner peripheral surface of the outer wall of the hollow cylindrical vessel. The starting material composition is continuously fed in step c) into the bottom portion of the reactor compartment being located below the cathode and led upwardly through the upper portion of the reactor compartment having the form of an annular gap being arranged between the peripheral surface of the cathode and the outer wall, wherein the product composition is continuously withdrawn from the top surface of the reactor compartment.

The cathode may be formed in the aforementioned embodiment as a hollow cylindrical pipe, wherein the uppermost and the lowermost section are open, whereas the middle section between the uppermost and the lowermost sections is closed for instance by a casting compound. Moreover, in each of the uppermost section and of the lowermost section of the cathode an opening may be provided which allows the composition to flow from the interior of the cathode pipe into the annular section of the reactor compartment and vice versa.

In a further development of the idea of the present invention, it is suggested that the annular reactor compartment, if the whole reactor compartment has the form of an annular ring, or the annular section of the reactor compartment, if the whole reactor compartment comprises not only the annular section, but also a further section, such as the above described cylindrical gap or section, respectively, comprises a lower and an upper sub-section, wherein the lower sub-section has a smaller gap width than the upper sub-section, and wherein catalyst is only present in the upper sub-section, but not in the lower sub-section. Thereby, plasma is generated in the lower sub-section, but no catalytic reaction occurs in the lower sub-section, whereas in the upper sub-section the catalytic reactions occur. Thereby, the reactor comprises two zones, namely seen from the bottom to the top of the reactor, a mere ignition zone and above thereof a combined catalytic zone. Good results are in particular obtained, when the lower sub-section has a (gap) width of 0.1 to 5 mm, preferably of 0.2 to 3 mm, more preferably of 0.5 to 2 mm and most preferably of 0.8 to 1.5 mm, such as of about 1 mm, whereas the upper sub-section has preferably a (gap) width of more than 3 to 50 mm, more preferably of 10 to 30 mm and most preferably of 15 to 25 mm. Moreover, it is preferred that the length or height, respectively, of the lower sub-section is 1 to 50 mm, preferably 5 to 30 mm and more preferably 10 to 20 mm.

If the annular reactor compartment, if the whole reactor compartment has the form of an annular ring, or the annular section of the reactor compartment, if the whole reactor compartment comprises not only the annular section, has a uniform width over its whole length or height, respectively, it is preferred that the width is 1 to 30 mm and more preferably 3 to 10 mm.

In accordance with the present invention, a reactor being at least partially filled with a liquid is provided in step b). In principle, the present invention is not particularly limited concerning the chemical nature of the liquid. However, it is preferred that the liquid does not participate in any of the reactions taking place in the reactor. Moreover, it is preferred that the liquid has a good capability of incorporating carbon monoxide and preferably also hydrogen and optionally of other side-products being generated during step d). Therefore, it is preferred that the liquid has a high chemical or physical solubility for carbon monoxide and hydrogen, that the liquid has a high absorptivity for carbon monoxide and hydrogen or that the liquid has a high potential for complexing carbon monoxide and hydrogen. Thereby, the product composition being generated in the gas bubbles in the presence of the non-thermal plasma and diffusing into the liquid is maintained in the liquid phase so that it leaves the reactor together with the liquid and may not return into the gas bubbles, where it may be subjected to undesired back reactions and/or side-reactions.

In view of all this, it is preferred that in step b) a liquid is used, which has at ambient pressure and at 20°C a solubility of at least 20 mg/l, preferably of at least 25 mg/l and more preferably of at least 30 mg/l. Good results are in particular obtained, when the liquid is water, a C₁₋₆-alcohol, an aqueous solution containing a metal ion or an alkaline aqueous solution having a pH value of at least 10. Suitable metal ions are ions of lithium, beryllium, sodium, magnesium, kalium, calcium, scandium, titanium, vanadium, manganese, iron, cobalt, nickel, copper and zinc. Thus, any aqueous solution containing any salt of lithium, beryllium, sodium, magnesium, kalium, calcium, scandium, titanium, vanadium, manganese, iron, cobalt, nickel, copper and zinc may be used. The salt may be a sulfate, a carbonate, a phosphate, nitrate or the like. Preferably, the alkaline aqueous solution has a pH value of at least 11, more preferably of at least 12, even more preferably of at least 13 and most preferably of 14. Suitable examples for the C₁₋₆-alcohol are methanol and ethanol. Particularly preferably, the liquid is water, methanol, ethanol, ammonia, an aqueous solution of sodium hydroxide, an aqueous solution of kalium hydroxide or an aqueous solution of an iron salt, such as of iron (II) sulfate and/or iron (III) sulfate.

In order to assist the formation of a plasma within the at least one gas bubble during step d), a liquid having a comparable low electric conductivity such as a liquid having an electric conductivity of less than 10⁻⁶ S/m. Good results are in particular obtained, when the liquid has an electric conductivity of less than 10⁻⁷ S/m, more preferably of less than 10⁻⁸ S/m, even more preferably of less than 10⁻⁹ S/m, still preferably of less than 10⁻¹⁰ S/m and most preferably of less than 10⁻¹¹ S/m.

Alternatively, the liquid may have a comparable high electric conductivity of 10⁻⁶ S/m or more. However, in this case it is preferred that alternating voltage or pulsed direct voltage having a comparable high frequency of at least 50 kHz, more preferably at least 80 kHz and still more preferably of at least 100 kHz is applied, because then the liquid behaves - on account of the high frequency of the change of the polarity - like a dielectric liquid. In this embodiment, for instance distilled water or methanol may be used as liquid. Preferably, the frequency of the alternating voltage or pulsed direct voltage of this embodiment is at most 1 MHz, more preferably at most 500 kHz and most preferably at most 200 kHz.

If a liquid having a comparable low electric conductivity of less than 10⁻⁶ S/m is used, the frequency of the alternating voltage or pulsed direct voltage is preferably 0.01 to 100 kHz, more preferably 0.1 to 100 kHz, still more preferably 1 to 50 kHz and most preferably 10 to 50 kHz.

In a further development of the idea of the present invention, it is proposed that in step b) at least one catalyst is added into the reactor. The at least one catalyst may be added in order to increase the reaction rate by lowering the activation energy and to increase the selectivity for the desired product composition of any of the reactions being involved in the production of the product composition. However, even if possible, a catalyst is not mandatorily required for the production of the product composition. Nevertheless, one or more catalysts may be added into the reactor in order to increase the reaction rate of the one or more reactions being involved in the production of the product composition. Each catalyst may be added into the reactor and in particular into the reactor compartment of the reactor as bulk or as grid, through which the liquid and the at least one gas bubble flow, or it may be dispersed in the liquid as particles. The bulk may be any kind of granulate or powder. In particular, it is preferred that the catalyst particles have sharp corners, since the electric field generated at the sharp corners in the at least one gas bubble is particularly high.

Preferably, in step b) at least one catalyst is added into the reactor, which comprises or consists of a material being selected from the group consisting of aluminum oxide, zirconium dioxide, being optionally stabilized with yttrium or calcium, barium titanate, calcium titanate, silica, titanium dioxide and arbitrary mixtures of two or more of the aforementioned carriers. In particular, when the temperature in the reactor, i.e. in the gas bubbles and liquid, during step d) is at least 150°C, the at least one catalyst may comprise an active species, such as a metal being selected from the group consisting of iron, copper, zinc, cobalt, nickel, ruthenium, platinum, rhodium, palladium and arbitrary mixtures of two or more of the aforementioned metals. Preferably, the active species is arranged on a carrier material being selected from the group consisting of aluminum oxide, zirconium dioxide, being optionally stabilized with yttrium or calcium, barium titanate, calcium titanate, silica, titanium dioxide and arbitrary mixtures of two or more of the aforementioned carriers.

In accordance with the present invention, in step c) the starting material composition is fed into the reactor so that at least one gas bubble and preferably a plurality of gas bubbles of the starting material composition forms within the liquid. This may be for instance achieved by feeding the starting material composition into the liquid being provided in the reactor via a gas bubble generator being provided in the reactor and/or by feeding the starting material composition into the liquid with excess pressure so that a pressure relief of the starting material composition takes place within the liquid. In the latter case, the starting material composition is preferably fed into the liquid with a pressure being 1 to 1,000 kPa and more preferably 10 to 100 kPa higher than the pressure of the liquid, into which the starting material composition is fed. In the case of using a gas bubble generator, the gas bubble generator preferably is or comprises at least one of an opening, a nozzle, an injector and a porous body. For example, the porous body may be composed of pumice stone, carbon foam or silicon carbide foam.

Good results are in particular achieved, when the starting material composition is fed in step c) into the reactor so that a plurality of gas bubbles of the starting material composition forms and ascends within the liquid, wherein the gas bubbles have, after being formed within the liquid, a median bubble size of 0.1 to 10 mm and preferably of 1 to 5 mm. Median bubble size or d₅₀-bubble size, respectively, means a gas bubble size, wherein 50% of the gas bubbles are larger and 50% are smaller than the gas bubble size. In other words, 50% of the gas bubbles being formed in the liquid have a larger bubble size and 50% of the gas bubbles being contained in the liquid have a smaller bubble size than the median bubble size.

The aforementioned gas bubble sizes are preferred for the gas bubbles at or immediately after the point of time, when they are formed. Afterwards, the gas bubble first slightly increases while ascending in the liquid, before the gas bubbles are slashed during the generation of the plasma in step d) into smaller gas bubbles being dispersed in the liquid. For instance, the gas bubbles may be slashed during the generation of the plasma in step d) into so small gas bubbles that a foam of small gas bubbles being dispersed in the liquid generates.

In accordance with the present invention, a plasma is generated in step d) by dielectric-barrier discharge in the at least one gas bubble so as to produce in the at least one gas bubble a product composition. Plasma denotes a state of matter being characterized by the presence of high amounts of very reactive species, such as in particular of ions, electrons and radicals. This allows reactions, which would not take place under ambient conditions or even at moderate temperature and pressure conditions, such as endothermic reactions. More specifically, carbon dioxide, especially together with hydrogen, is converted by the plasma to a plurality of species, such as molecules, ions and radicals so that the product composition being produced by the plasma contains for instance - as molecule, ion or radical - any species selected from the group consisting of CO, HCO, HOCO, HCOO, HCOOH, H₂COO, H₂CO₂H, H₂CO, H₂COH, HsCO, CHsOH and arbitrary combinations of two or more thereof, if carbon dioxide is contained in the starting material composition. If water is contained in the starting material composition, also hydrogen and oxygen are formed during step d).

Preferably, the product composition contains, based on 100% by volume of the product composition, 25 to 33% by volume carbon monoxide and 67 to 75% by volume hydrogen. Moreover, it is preferred that the sum of carbon monoxide and hydrogen the product composition amounts to at least 80% by volume, preferably at least 90% by volume, more preferably at least 95% by volume and most preferably 100% by volume.

In order to generate a non-thermal plasma in the at least one gas bubble in step d) by dielectric-barrier discharge, a sufficiently high electric field must be generated within the at least one gas bubble. The magnitude of the electric field is determined by the magnitude of voltage applied between the cathode and the anode as well as by the distance of the cathode and the anode, since the electric field is the quotient of the voltage divided by the distance between the electrodes. Alternating voltage or pulsed direct voltage may be used for the dielectric-barrier discharge, wherein alternating voltage is particularly preferred. The magnitude of the electric field being necessary to generate in step d) in the at least one gas bubble a non-thermal plasma by dielectric-barrier discharge slightly depends on the absolute pressure in the at least one gas bubble and on the ionization energy of the starting material composition being contained in the gas bubble, whereas the temperature of the liquid and/or the at least one gas bubble does not measurably influence the magnitude of the required electric field. In tendency, the higher the absolute pressure in the at least one gas bubble, the higher the required electric field and the higher the ionization energy of the starting material composition being contained in the gas bubble, the higher the required electric field. Thus, the absolute pressure in the at least one gas bubble should be in view of the ease of generating plasma with an electric field comparably low; however, from the point of view of the synthesis reaction a certain minimum pressure in the at least one gas bubble is required. On account of these reasons, a compromise between both tendencies has to be made to evaluate the optimal gas pressure in the at least one gas bubble.

In accordance with a particularly preferred embodiment of the present invention, in the at least one gas bubble an electric field with an electric field strength of 10 to 3,000 kV/cm and preferably of 30 to 1,500 kV/cm is generated in step d). The electric field strength within the at least one gas bubble may be easily determined by simulation, for instance by using the software COMSOL Multiphysics from the company COMSOL AB. The aforementioned electric field strength advantageously assures that the plasma is generated during step d) only in the at least one gas bubble, but not in the liquid. This is due to the fact that the aforementioned electric field strength is too low to generate a plasma in a liquid. This electric field strength may be for instance achieved by applying an alternating voltage of 1 to 100 kV and preferably of 10 to 30 kV or by applying a pulsed direct voltage of 1 to 100 kV and preferably of 10 to 30 kV between the electrodes.

The present invention is not particularly limited concerning the temperature within the at least one gas bubble and within the liquid during step d). Good results are in particular obtained, when the temperature in the reactor and thus in the liquid as well as in the at least one gas bubble is adjusted during step d) to be more than the melting point, but less than the boiling point of the liquid used in step b) at the pressure in the reactor during step d) so that the liquid remains during step d) in the liquid aggregate state. For instance, if methanol is used as liquid and the pressure in the reactor during step d) is 100 kPa, then the temperature during step d) is preferably between -98°C and 65°C. In view of the solubility of the liquid for carbon monoxide, it is in tendency preferred that temperature during step d) is comparably low and the pressure is comparably high. For instance, the temperature within the at least one gas bubble and within the liquid during step d) is more than 0 to 100°C, preferably to more than 0 to 50°C, more preferably to 15 to 60°C, still more preferably to 20 to 30°C and most preferably to ambient temperature.

Furthermore, it is preferred that the absolute pressure in the at least one gas bubble is adjusted during step d) to more than 50 to 500 kPa and more preferably to more than 100 to 150 kPa.

The one or more reactions taking place in step d) may be mostly endothermic or rarely exothermic. However, it is preferred that the one or more reactions taking place in step d) are endothermic due to the presence of the plasma.

The product composition contains the reaction products obtained in the one or more reactions taking place in step d) as well as residual starting composition and/or side-products. Thus, depending on the amount of residual starting composition and side-products, the product composition may be purified. The present invention is not particularly restricted concerning the kind of purification. For instance, the product composition may be degassed, for instance by a flash degassing, also in order to remove residual gaseous starting composition as well as residual gaseous product composition. In addition or alternatively thereto, if necessary, one or more separation steps being selected from distillation, extraction, absorption, adsorption and stripping may be performed in order to remove side-products and eventually carbon monoxide and other product gases, like hydrogen, from the remaining liquid.

In accordance with a further aspect, the present invention relates to a reactor producing a carbon monoxide containing composition, wherein the reactor comprises an anode, a cathode, a source for alternating voltage or pulsed direct voltage being connected with the anode and the cathode, a reactor compartment being arranged between the anode and the cathode and a dielectric barrier being arranged between the anode and the reactor compartment, wherein i) the reactor comprises a hollow cylindrical vessel, the peripheral surface of which being formed of an outer wall forming the dielectric barrier, wherein a cylindrical cathode being provided with a central through hole extending from the top surface to the bottom surface of the cylindrical cathode is arranged in the center of the cylindrical vessel, wherein the cylindrical cathode is concentrically surrounded on its peripheral surface and on its bottom end by the reactor compartment, wherein the peripheral surface of the reactor compartment in turn is surrounded by the outer wall and the outer wall is surrounded by the anode, or wherein ii) the reactor comprises a hollow cylindrical vessel, the peripheral surface of which being formed of an outer wall forming the dielectric barrier, wherein a cylindrical cathode is arranged in the center of the cylindrical vessel, wherein the cylindrical cathode is concentrically surrounded on its peripheral surface and on its bottom end by the reactor compartment, wherein the peripheral surface of the reactor compartment in turn is surrounded by the outer wall and the outer wall is surrounded by the anode.

It is preferred in the alternative i) that the cylindrical gap extends from the bottom of the cylindrical vessel upwardly over 1 to 40% and more preferably over 5 to 20% of the height of the cylindrical vessel. The inlet for the starting material composition is the upper opening of the through hole of the central cathode, whereas the outlet for the product composition is located at the upper end of the reactor compartment.

Preferably, the vertical distance between the upper surface of the cathode and the upper surface of the anode corresponds to 10 to 50% and preferably to 20 to 40% of the height of the reactor compartment. More preferably, the cathode extends, seen in the vertical direction, from its bottom surface being located at a horizontal plane being arranged 5 to 20% and preferably 10 to 40% of the height of the reactor compartment above the bottom surface of the reactor compartment to its top surface being located at a horizontal plane being arranged 0 to 30% and preferably 0 to 10% of the height of the reactor compartment below the top surface of the reactor compartment, whereas the anode extends, seen in the vertical direction, from its bottom surface being located at a horizontal plane being arranged 0 to 30% and preferably 0 to 10% of the height of the reactor compartment above the bottom surface of the reactor compartment to its top surface being located a horizontal plane being arranged 10 to 50% and preferably 20 to 40% of the height of the reactor compartment below the horizontal plane of the top surface of the cathode. The cathode may be formed in the aforementioned embodiment as a hollow cylindrical pipe, wherein the uppermost and the lowermost section are open, whereas the middle section between the uppermost and the lowermost sections is closed for instance by a casting compound. Moreover, in each of the uppermost section and of the lowermost section of the cathode an opening may be provided which allows composition to flow from the interior of the cathode pipe into the annular section of the reactor compartment and vice versa.

In accordance with a particularly preferred embodiment of the present invention, the reactor compartment is an annular ring or comprises an annular ring section, wherein the annular ring or annular ring section comprises a lower and an upper sub-section, wherein the lower sub-section has a smaller width than the upper sub-section. Preferably, the lower sub-section has a (gap) width of 0.1 to 5 mm, more preferably of 0.2 to 3 mm, even more preferably of 0.5 to 2 mm and most preferably of 0.8 to 1.5 mm, whereas the upper sub-section has preferably a (gap) width of more than 3 to 50 mm, more preferably of 10 to 30 mm and most preferably of 15 to 25 mm. The length or height, respectively, of the lower sub-section is preferably 1 to 50 mm, more preferably 5 to 30 mm and most preferably 10 to 20 mm.

In a further development of the idea of the present invention, it is suggested that catalyst is present in the upper sub-section, whereas no catalyst is present in the lower sub-section of the annular ring or annular ring section of the reactor compartment. Thereby, during the operation of the reactor plasma is generated in the lower sub-section, but no catalytic reaction occurs in the lower sub-section, whereas plasma is generated and also catalytic reactions occur in the upper sub-section of the annular ring or annular ring section of the reactor compartment.

If the annular reactor compartment, when the whole reactor compartment has the form of an annular ring, or the annular section of the reactor compartment, when the whole reactor compartment comprises not only the annular section, has a uniform gap width over its whole length or height, respectively, it is preferred that the width is 1 to 30 mm and preferably 3 to 10 mm.

In a further development of the idea of the present invention, it is proposed that the reactor compartment is at least partially filled with a catalyst, which is preferably selected from the group described further above.

In accordance with a further preferred embodiment of the present invention, the reactor compartment is at least partially filled with a liquid, which is preferably selected from the group described further above.

Preferably, the dielectric barrier is a solid dielectric barrier and more preferably a solid, non-perforated dielectric barrier.

The preferred materials, from which the anode, the cathode and the solid dielectric barrier are made, are those mentioned with regard to the method.

In addition, a cooling compartment may be further arranged on the side of the dielectric barrier being opposite to the side of the dielectric barrier surrounding the reactor compartment, wherein the cooling compartment is preferably filled with a cooling agent.

In a further development of the idea of the present invention, it is suggested that the reactor further comprises a gas bubble generator. Good results are in particular achieved, when the gas bubble generator is or comprises at least one of an opening, a nozzle, an injector and a porous body.

In accordance with a further embodiment, the present invention relates to a tube bundle reactor comprising at least two of the aforementioned reactors being arranged in parallel to each other. For instance, the tube bundle reactor comprises more than 100 and preferably 1,000 to 100,000 reactors.

Alternatively, the tube bundle reactor may comprise a housing in which at least two, preferably more than 100 and preferably 1,000 to 100,000 hollow cylindrical vessels are arranged, the peripheral surface of each of which being formed of an outer wall forming the dielectric barrier, wherein a cylindrical cathode is arranged in the center of each of the cylindrical vessels, wherein each of the cylindrical cathodes is concentrically surrounded on its peripheral surface and on its bottom end by a reactor compartment, wherein the peripheral surface of the reactor compartment in turn is surrounded by the outer wall and the outer wall is surrounded by the anode, wherein all hollow cylindrical vessels are arranged side by side, but spaced apart from each other, wherein a liquid anode, such as water, may be added into the void volume between the hollow cylindrical vessels.

In accordance with another embodiment of the present invention, two or more, such as two to five, of the aforementioned reactors are arranged in series to each other, wherein the outlet of an upstream reactor is directly or indirectly connected with the inlet of an adjacent downstream reactor. Preferably, the outlet of an upstream reactor and the inlet of an adjacent downstream reactor, a separation means is arranged for purifying the product composition so that only the purified product composition is led from the separation means to the inlet of the adjacent downstream reactor.

Subsequently, the present invention is described by means of illustrative, but not limiting figures, in which:
- Fig. 1: shows a schematic cross-section of a reactor in accordance with one embodiment of the present invention.
- Fig. 2: shows a schematic cross-section of a reactor in accordance with another embodiment of the present invention.
- Fig. 3: shows a schematic cross-section of a reactor in accordance with another embodiment of the present invention.

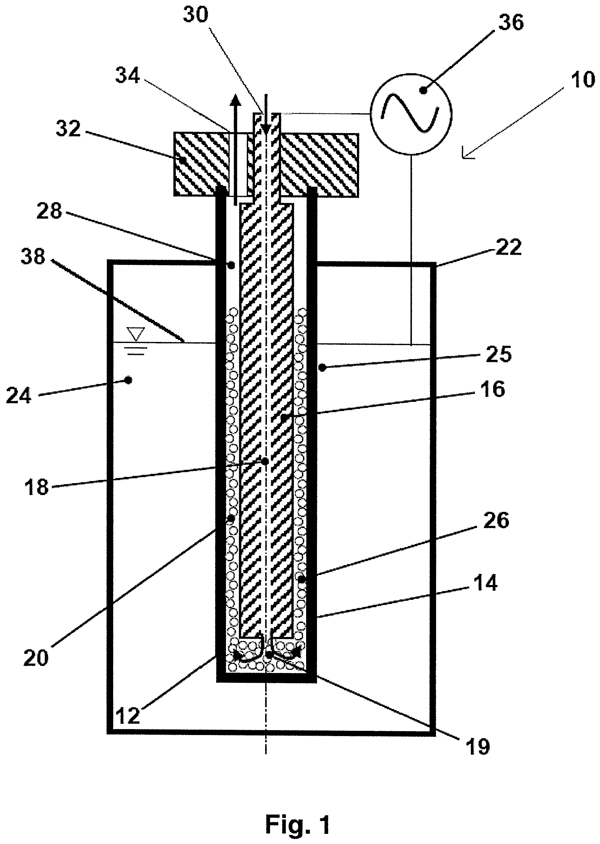

The reactor 10 shown in figure 1 comprises an inner hollow cylindrical vessel 12, wherein the peripheral surface of the inner hollow cylindrical vessel 12 is formed of an outer wall 14 forming the dielectric barrier, wherein a cylindrical cathode 16 being provided with a central through hole 18 extending from the top surface to the bottom surface of the cylindrical cathode 16 is arranged in the central portion of the cylindrical vessel 12. The bottom end of the through hole 18 is an opening functioning as gas bubble generator 19. While the cylindrical cathode 16 is concentrically surrounded on its peripheral surface and on its bottom end by a reactor compartment 20, the reactor compartment 20 in turn is surrounded by the outer wall 14. The inner hollow cylindrical vessel 12 is concentrically surrounded by an outer hollow cylindrical vessel 22, wherein an annular compartment 24 is formed between the outer wall 14 of the inner hollow cylindrical vessel 12 and the inner wall of the outer hollow cylindrical vessel 22. The annular compartment 24 is filled with water 25, which functions during the operation of the reactor 10 as anode 25 and as cooling agent. The reactor compartment 20 is filled with catalyst particles 26 as well as with liquid 28. The uppermost portion of the through hole 18 provided in the cylindrical cathode 16 forms an inlet 30 for the starting material composition. Furthermore, a closing plate 32 is arranged on top of the reactor compartment 20, which comprises a through hole, the upper portion of which forming the outlet 34 for the product composition. Moreover, the reactor 10 comprises a source for alternating voltage 36, which is connected with the cylindrical cathode 16 as well as with the anode 25. As it derives from figure 1, the annular compartment 24 of the outer hollow cylindrical vessel 22 is not completely filled with water 25, but only until the level 38. Thus, the cylindrical cathode 16 as well as the catalyst 26 extend vertically above the water level 38 or top surface of the anode 25, respectively.

During the operation of the reactor 10, a gaseous starting material composition, such as one comprising carbon dioxide, hydrogen, water and hydrocarbons, is continuously fed via the inlet 30 into the through hole 18 of the cathode 16 of the reactor 10. The starting material composition is led through the through hole 18 and through its lower opening into the lower portion of the reactor compartment 20, where the gaseous starting material composition is led into the liquid and is deflected so as to form gas bubbles in the liquid 28 and to ascend within the liquid 28. An alternating voltage is applied via the source 36 between the cathode 16 and the anode 25 so that an electric field is generated between the cathode 16 and the anode 25. Thereby, a non-thermal plasma is generated by dielectric barrier discharge within the gas bubbles. On account of the plasma, endothermic reactions, such as the decomposition of carbon dioxide to carbon monoxide, producing the product composition. The gas bubbles and liquid then ascend and leave the reactor 10 through the outlet 34. The gas/liquid separation is performed downstream of the reactor 10 with any suitable separation technique, such by a flash method, by rectification or the like.

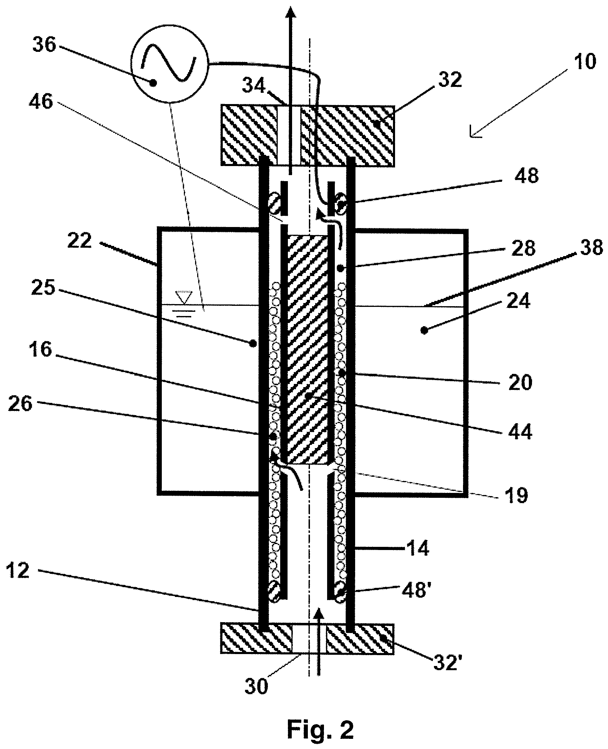

The reactor 10 shown in figure 2 corresponds to that of figure 1 except that inlet 30 is not arranged at the top of the reactor, but at its bottom. More specifically, the inner hollow cylindrical vessel 12 is open at its bottom, but a closing plate 32' being provided with an opening forming the inlet 30 is arranged at the bottom surface of the inner hollow cylindrical vessel 12. Moreover, the cathode 16 does not comprise a through hole, but is a copper pipe being filled in its upper portion with a casting compound 44, whereas the lower end is unfilled. The cathode 16 pipe comprises at its upper section an opening 46 and below the casting compound 44 a further opening 19, which functions as gas bubble generator 19. In addition, in the upper section of the reactor compartment 20 and in the lower section of the reactor compartment 20 gaskets 48, 48', which are for example made of silicone, are provided, wherein the lower gasket 48' seals the lower end of the annular section of the reactor compartment 20 so that the catalyst is fixed in the annular section. During the operation of the reactor 10, a gaseous starting material composition is continuously fed via the inlet 30 into the reactor compartment 20 and flows upwardly until the lower end of the casting compound 44, where the gaseous starting material composition is deflected so as to flow through the opening 19 into the liquid 28 so as to form gas bubbles in the liquid 28 and to ascend within the liquid 28. Thus, the opening 19 functions as bubble gas generator 19. An alternating voltage is applied via the source 36 between the cathode 16 and the anode 25 so that an electric field is generated between the cathode 16 and the anode 25. Thereby, a non-thermal plasma is generated by dielectric barrier discharge within the gas bubbles and the aforementioned reactions take place. The gas bubbles and liquid then ascend through the upper opening 46 and leave the reactor 10 through the outlet 34. The gas/liquid separation is performed downstream of the reactor 10 with any suitable separation technique, such by a flash method, by rectification or the like.

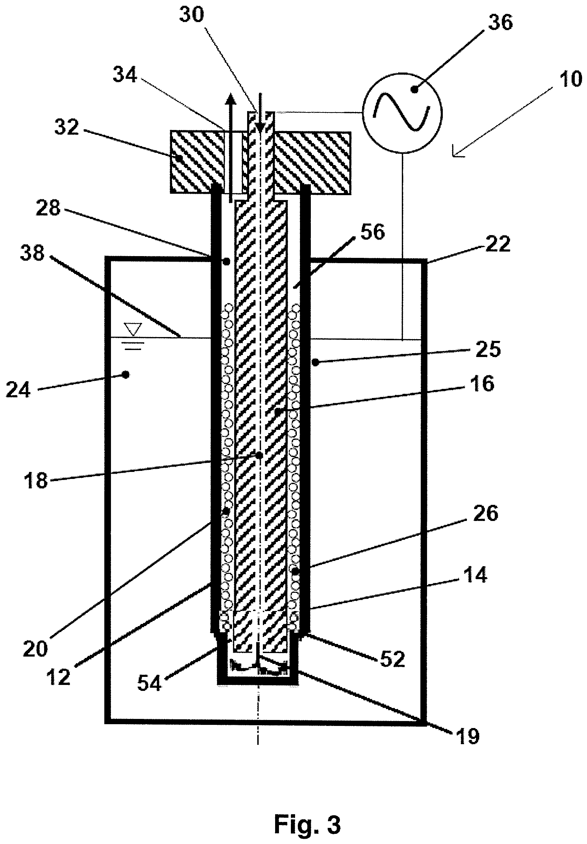

The reactor 10 shown in figure 3 corresponds to that of figure 1 except that the lower part of the inner hollow cylindrical vessel 12 is differently constructed. More specifically, the inner diameter of the lowermost portion of the inner hollow cylindrical vessel 12 is smaller than that of the portion arranged above so that a step 52 is present in the lowermost portion of the inner hollow cylindrical vessel 12 so that the annular section of the reactor compartment 20 comprises a lower sub-section 54 and an upper sub-section 56, wherein the lower sub-section 54 has a smaller gap width than the upper sub-section 56. The catalyst 26 is only contained in the upper sub-section 56 of the annular section of the reactor compartment 20, but not in the lower sub-section 54. Thereby, no catalytic initiated reaction can place in the lower sub-section 54 of the annular section of the reactor compartment 20 so that the lower sub-section 54 is a mere ignition zone 58.

Subsequently, the present invention is described by means of illustrative, but not limiting examples.

### Example 1

### Synthesis of starting material composition containing carbon dioxide and hydrogen

Synthesis gas was synthesized from a gaseous starting material composition containing carbon dioxide and hydrogen in a reactor 10 corresponding to that shown in figure 1. More specifically, the reactor 10 comprised as inner hollow cylindrical vessel 12 a tube being made of borosilicate glass 3.3 functioning as dielectric barrier and having an outer diameter of 22 mm, a wall thickness of 2 mm and a length or height, respectively, of 180 mm. The cylindrical cathode 16 being provided with a central through hole 18 extending from the top surface to the bottom surface of the cylindrical cathode 16 was arranged in the central portion of the cylindrical vessel 12, wherein the cylindrical cathode 16 had a length or height, respectively, of 250 mm and an outer diameter of 10 mm. Consequently, a reactor compartment 20 was formed between the outer surface area of the cylindrical cathode 16 and the inner surface area of the inner hollow cylindrical vessel 12, wherein the annular gap between the outer peripheral surface area of the cylindrical cathode 16 and the inner peripheral surface area of the inner hollow cylindrical vessel 12 had a width of 4 mm. The distance between the lower end of the cylindrical cathode 16 and the inner surface area of the bottom of the hollow cylindrical vessel 12 was 10 mm. The inner hollow cylindrical vessel 12 was concentrically surrounded by an outer hollow cylindrical vessel 22 being made of polyethylene terephthalate and having an outer diameter of 100 mm, a wall thickness of 1 mm and a length or height, respectively, of 200 mm, wherein the annular compartment 24 being formed between the outer peripheral surface area of the inner hollow cylindrical vessel 12 and the inner peripheral surface area of the outer hollow cylindrical vessel 22 was filled with water functioning as anode 25 and as cooling agent. The water level 38 corresponded to 80% of the length or height, respectively, of the outer hollow cylindrical vessel 22 and to 60% of the length or height, respectively, of the cylindrical cathode 16. The reactor compartment 20 was filled with catalyst particles 26 comprising aluminum oxide (Al₂O₃) in the form of spheres having a median diameter of 1.8 mm. Due to its surface properties, to its morphology and to its dielectric properties, the used catalyst facilitates the formation of the desired plasma in the gas bubbles. In addition, the reactor compartment 20 was filled with electrically insulating deionized water as liquid 28. "Minipuls 6" by GBS GmbH, Großerkmannsdorf, Germany was used as source 36 for alternating voltage.

50 sccm of a gaseous starting material composition consisting of hydrogen and carbon dioxide with a mixing ratio of 3:1 by volume were fed via the inlet 30 into the through hole 18 of the cathode 16 of the reactor 10, guided through the through hole 18 and through its lower opening into the lower portion of the reactor compartment 20, where the gaseous starting material composition was led into the liquid and was deflected so as to form gas bubbles in the liquid 28 and to ascend within the liquid 28. An alternating voltage of 10 kV with a frequency of 15 kHz was applied to the cylindrical cathode 16. Thereby, a non-thermal plasma was generated by dielectric barrier discharge within the gas bubbles. It has found that 30% to 50% of the carbon dioxide were converted in the gas bubbles into carbon monoxide and a corresponding amount of oxygen, that carbon monoxide and hydrogen as product diffused into the liquid phase on account of the significantly increased surface area at the interface between the gas bubbles and the liquid 28.

### Reference numerals

- 10: Reactor
- 12: Inner hollow cylindrical vessel
- 14: Outer wall of the reactor / dielectric barrier
- 16: Cathode
- 18: Through hole of the cathode
- 19: Gas bubble generator / opening
- 20: Reactor compartment
- 22: Outer hollow cylindrical vessel
- 24: Annular compartment
- 25: Anode / water
- 26: Catalyst
- 28: Liquid
- 30: Inlet of reactor
- 32, 32': Closing plate
- 34: Outlet of reactor
- 36: Source for alternating voltage
- 38: Level of water / upper surface of anode
- 44: Casting compound
- 46: Opening
- 48, 48': Gaskets
- 52: Step in the wall of the inner hollow cylindrical vessel
- 54: Lower sub-section of the annular section of the reactor compartment
- 56: Upper sub-section of the annular section of the reactor compartment

## Claims

1. A method of producing a carbon monoxide containing composition comprising the following steps:
a) providing a starting material composition containing carbon dioxide,
b) providing a reactor (10) being at least partially filled with a liquid (28),
c) feeding the starting material composition provided in step a) into the reactor (10) provided in step b) so that at least one gas bubble of the starting material composition forms within the liquid (28), and
d) generating a plasma by dielectric-barrier discharge in the at least one gas bubble so as to produce in the at least one gas bubble a product composition containing the carbon monoxide.

2. The method in accordance with claim 1, wherein in step a) a starting material composition is provided, which contains 20 to 100% by volume, preferably 40 to 100% by volume, more preferably 60 to 100% by volume, still more preferably 80 to 100% by volume, yet more preferably 90 to 100% by volume, even more preferably 95 to 100% by volume and most preferably 100% by volume of carbon dioxide based on 100% by volume of the starting material composition.

3. The method in accordance with claim 1 or 2, wherein in step a) a starting material composition is provided, which contains, based on 100% by volume of the starting material composition, 1 to 30% by volume of water and 70 to 99% by volume of carbon dioxide and preferably 5 to 25% by volume of water and 75 to 95% by volume of carbon dioxide, wherein the sum of water and carbon dioxide in the starting material composition is at least 70% by volume, preferably at least 80% by volume, more preferably at least 90% by volume, still more preferably at least 95% by volume and most preferably 100% by volume.

4. The method in accordance with any of the preceding claims, wherein in step a) a starting material composition is provided, which contains, based on 100% by volume of the starting material composition, 5 to 30% by volume of at least one hydrocarbon according to the formula CₓH_{y}, wherein x is an integer of 1 to 100 and y is at least equal to x or at most 2·x + 2, preferably 2·x + 2, and 70 to 95% by volume of carbon dioxide and preferably 10 to 25% by volume of at least one hydrocarbon according to the formula CₓH_{y} and 75 to 90% by volume of carbon dioxide, wherein the sum of at least one hydrocarbon according to the formula CₓH_{y} and carbon dioxide in the starting material composition is at least 70% by volume, preferably at least 80% by volume, more preferably at least 90% by volume, still more preferably at least 95% by volume and most preferably 100% by volume.

5. The method in accordance with any of the preceding claims, wherein in step b) a reactor (10) is provided, which comprises two electrodes (16, 25), a source (36) for alternating voltage or pulsed direct voltage being connected with the two electrodes (16, 25), a reactor compartment (20) being arranged between the two electrodes (16, 25) and being at least partially filled with the liquid (28), and a solid dielectric barrier (14) being arranged between the reactor compartment (20) and one of the two electrodes (25), wherein in step c) the starting material composition is continuously fed into the reactor compartment (20) at a first location and the product composition is continuously withdrawn from the reactor compartment (20) at a second location, wherein the reactor (10) preferably further comprises a gas bubble generator (19), wherein the gas bubble generator (19) preferably is or comprises at least one of an opening, a nozzle, an injector and a porous body.

6. The method in accordance with any of the preceding claims, wherein the reactor (10) provided in step b) is at least partially filled with a liquid (28) having at ambient pressure and at 20°C a solubility of at least 20 mg/l, preferably of at least 25 mg/l and more preferably of at least 30 mg/l, wherein the liquid (28) is preferably water, a C₁₋₆-alcohol, an aqueous solution containing a metal ion or an alkaline aqueous solution having a pH value of at least 10, and most preferably the liquid (28) is water, methanol, ethanol, ammonia, an aqueous solution of sodium hydroxide, an aqueous solution of kalium hydroxide or an aqueous solution of an iron salt, such as of iron (II) sulfate and/or iron (III) sulfate.

7. The method in accordance with any of the preceding claims, wherein in step b) at least one catalyst (26) is added into the reactor (10), wherein the at least one catalyst (26) is dispersed in the liquid (28) or added as bulk into the liquid (28) or is a grid, through which the liquid (28) flows, wherein the catalyst (26) comprises or consists of a compounds being selected from the group consisting of aluminum oxide, zirconium dioxide, being optionally stabilized with yttrium or calcium, barium titanate, calcium titanate, silica, titanium dioxide and arbitrary mixtures of two or more of the aforementioned compounds, wherein the at least one catalyst may in addition comprise as active species a metal being selected from the group consisting of iron, copper, zinc, cobalt, nickel, ruthenium, platinum, rhodium, palladium and arbitrary mixtures of two or more of the aforementioned metals.

8. The method in accordance with any of the preceding claims, wherein the product composition being formed during step d) contains, based on 100% by volume of the product composition, 25 to 33% by volume carbon monoxide and 67 to 75% by volume hydrogen, wherein preferably the sum of carbon monoxide and hydrogen in the product composition is, based on 100% by volume of the product composition, at least 60% by volume, preferably at least 80% by volume, more preferably at least 90% by volume, still more preferably at least 95% by volume and most preferably 100% by volume.

9. The method in accordance with any of the preceding claims, wherein the absolute pressure in the at least one gas bubble during step d) is adjusted to more than 50 to 500 kPa and preferably to more than 100 to 150 kPa, and wherein the temperature in the reactor (10) during step d) is adjusted to more than the melting point, but less than the boiling point of the liquid (28) used in step b) at the pressure in the reactor during step d) so that the liquid remains during step d) in the liquid aggregate state, and preferably to more than 0 to 100°C, preferably to more than 0 to less than 100°C, more preferably to 15 to 60°C, still more preferably to 20 to 30°C and most preferably to ambient temperature.

10. The method in accordance with any of the preceding claims, wherein in step d) in the at least one gas bubble an electric field with an electric field strength of 10 to 1,500 kV/cm and preferably of 30 to 150 kV/cm is generated.

11. The method in accordance with any of the preceding claims, wherein in step d) an electrodynamic field is generated by applying alternating voltage or pulsed direct voltage to the anode and cathode having i) a frequency of 50 kHz to 1 MHz, preferably of 80 to 500 kHz and more preferably of 100 to 200 kHz, or having ii) a frequency of 0.01 to 100 kHz, preferably of 0.1 to 100 kHz, more preferably of 1 to 50 kHz and most preferably of 10 to 50 kHz.

12. A reactor (10) for producing a carbon monoxide containing composition, wherein the reactor (10) comprises an anode (25), a cathode (16), a source (36) for alternating voltage or pulsed direct voltage being connected with the anode (25) and the cathode (16), a reactor compartment (20) being arranged between the anode (25) and the cathode (16) and a dielectric barrier (14) being arranged between the anode (25) and the reactor compartment (20), wherein i) the reactor (10) comprises a hollow cylindrical vessel (12), the peripheral surface of which being formed of an outer wall (14) forming the dielectric barrier (14), wherein a cylindrical cathode (16) being provided with a central through hole (18) extending from the top surface to the bottom surface of the cylindrical cathode (16) is arranged in the center of the cylindrical vessel, wherein the cylindrical cathode (16) is concentrically surrounded on its peripheral surface and on its bottom end by the reactor compartment (20), wherein the peripheral surface of the reactor compartment in turn is surrounded by the outer wall (14) and the outer wall (14) is surrounded by the anode (25), or wherein ii) the reactor (10) comprises a hollow cylindrical vessel (12), the peripheral surface of which being formed of an outer wall (14) forming the dielectric barrier (14), wherein a cylindrical cathode (16) is arranged in the center of the cylindrical vessel (12), wherein the cylindrical cathode (16) is concentrically surrounded on its peripheral surface and on its bottom end by the reactor compartment (20), wherein the peripheral surface of the reactor compartment (20) in turn is surrounded by the outer wall (14) and the outer wall is surrounded by the anode (25).

13. The reactor (10) in accordance with claim 12, wherein the reactor compartment (20) is an annular ring or comprises an annular ring section, wherein the annular ring or annular ring section comprises a lower sub-section (54) and an upper sub-section (56), wherein the lower sub-section (54) has a smaller gap width than the upper sub-section (56), wherein preferably the lower sub-section (54) has a gap width of 0.1 to 5 mm, more preferably of 0.2 to 3 mm, even more preferably of 0.5 to 2 mm and most preferably of 0.8 to 1.5 mm, wherein the upper sub-section (56) has preferably a gap width of more than 3 to 50 mm, more preferably of 10 to 30 mm and most preferably of 15 to 25 mm, and wherein the length or height, respectively, of the lower sub-section (54) is preferably 1 to 50 mm, more preferably 5 to 30 mm and most preferably 10 to 20 mm.

14. The reactor (10) in accordance with claim 12 or 13, wherein the reactor compartment (20) is at least partially filled with a catalyst, wherein the catalyst (26) is selected from the group consisting of from the group consisting of aluminum oxide, zirconium dioxide, being optionally stabilized with yttrium or calcium, barium titanate, calcium titanate, silica, titanium dioxide and arbitrary mixtures of two or more of the aforementioned carriers, wherein the at least one catalyst may in addition comprise as active species a metal being selected from the group consisting of iron, copper, zinc, cobalt, nickel, ruthenium, platinum, rhodium, palladium and arbitrary mixtures of two or more of the aforementioned metals.

15. The reactor (10) in accordance with any of claims 12 to 14, wherein the reactor compartment (20) is at least partially filled with a liquid (28) having at ambient pressure and at 20°C a solubility of at least 20 mg/l, preferably of at least 25 mg/l and more preferably of at least 30 mg/l, wherein the liquid (28) is preferably water, a C₁₋₆-alcohol, an aqueous solution containing a metal ion or an alkaline aqueous solution having a pH value of at least 10, and most preferably the liquid (28) is water, methanol, ethanol, ammonia, an aqueous solution of sodium hydroxide, an aqueous solution of kalium hydroxide or an aqueous solution of an iron salt, such as of iron (II) sulfate and/or iron (III) sulfate.
